# EUROPEAN PATENT SPECIFICATION

(11) **EP 3 707 576 B1**
(45) Date of publication and mention of the grant of the patent: **15.07.2026**
(21) Application number: 18875150.7
(22) Date of filing: 09.11.2018
(51) Int. Cl.: H02G 1/02, B66F 11/04, B66F 17/00

(54) **SYSTEM AND METHOD USING AT LEAST ONE INDUCTOR TO CONTROL TRANSIENT CURRENTS DURING ENERGIZED BOND-ON**
SYSTEM UND VERFAHREN MIT MINDESTENS EINEM INDUKTOR ZUR BEGRENZUNG VON TRANSIENTEN STRÖMEN WÄHREND ANBINDUNG UNTER SPANNUNG
SYSTÈME ET MÉTHODE UTILISANT AU MOINS INDUCTANCE POUR LIMITER LES COURANTS TRANSITOIRES PENDANT LA MISE AU POTENTIEL SOUS TENSION

(30) Priority: 09.11.2017 US 201762584003 P; 10.11.2017 CA 2985281; 13.11.2017 US 201762585291 P; 14.11.2017 CA 2985262
(43) Date of publication of application: 16.09.2020
(73) Proprietor: Quanta Associates, L.P., Houston, TX 77008 (US)
(72) Inventor: BILIC, Zoran, Winnipeg, MB R3X 2H8 (CA); BALL, David, James, La Grange, TX 78945-5304 (US)
(74) Representative: Williams Powell
(86) International application number: PCT/US2018/059997
(87) International publication number: WO 2019/094701

(56) References cited:
- CN-A- 105 576 554
- US-A- 3 139 948
- US-A- 4 191 986
- US-A- 5 296 844
- US-A1- 2003 213 644
- US-A1- 2016 356 826

## Description

### CROSS-REFERENCE TO RELATED APPLICATIONS

This application claims priority from United States Provisional Patent Application Nos. 62/584,003 filed on November 9, 2017 and 62/585,291 filed on November 13, 2017 and Canadian Patent Application Nos. 2,985,281 filed on November 10, 2017 and 2,985,262 filed on November 14, 2017, all entitled, "Inductor To Control Transient Currents During Energized Bond On".

### FIELD

Embodiments described herein generally relate to a system and method for use with high voltage power systems such as high voltage alternating current (AC) power systems or high voltage direct current (HVDC) power systems. More particularly, embodiments described herein relate to a system and method for controlling transient currents generated during an energized bond-on process with such power systems by a human worker.

### BACKGROUND

Live-line working, also known as hotline maintenance, is the maintenance of electrical equipment such as conductors, often operating at high voltage, while the equipment is energized. In most cases, the electrical equipment is a high voltage AC or DC power system which is in an overhead position. Live-line working is more efficient because the electrical equipment does not need to be shut off while the maintenance is being performed on the electrical equipment. There are several methods for carrying out live-line working. All these methods prevent current from the live electrical equipment/live parts(s) flowing through a human worker working on the live equipment. One such method is the equipotential method, which is commonly referred to in the industry as the "barehand method". In the barehand method, a worker is in direct electric contact with live electrical equipment. Before contact, the worker's body is raised to the same electric potential as the live electrical equipment, and is then held at that potential by electric connection, while maintaining suitable insulation from the surroundings which are at different potentials, like the ground, adjacent the electrical equipment. Because the worker and the live electrical equipment are at the same potential, no current flows through the worker.

The worker can be placed in the vicinity of the overhead live electrical equipment in a number of ways. One way includes placing the worker in the vicinity of the live electrical equipment through an insulating structure. The insulating structure may be a ladder, scaffolding or an aerial lift platform such as the bucket of a bucket truck for containing and delivering workers to a height of the energized electrical equipment. The insulating structure insulates the worker from ground potential.

Conventionally an aerial lift platform may include a bucket which is mounted to a truck, vehicle, or trailer chassis via a boom. The worker is located on the aerial platform, for example within the bucket. During operation, the boom is extended such that the bucket, and in turn the worker, resides besides an overhead energized electrical equipment requiring maintenance so that the worker in the bucket can perform maintenance on the energized electrical equipment. Typically the boom has multiple sections to allow added height and articulation of the bucket and only the final section of the boom connected to the bucket is insulated or made of a high strength insulating material such as fiberglass or other non-conductive or dielectric material. Thus, all sections of the boom below the final dielectric section may be made of a conductive material such as steel.

As the worker approaches the overhead energized electrical equipment, for example in the bucket of a bucket truck, an arc forms between the worker and the energized electrical equipment as the worker is being charged to the same potential as the electrical equipment. This arc can be debilitating, so the worker must immediately electrically bond to the energized electrical equipment to prevent further arcing. Typically, a conducting wand is used by the worker, during the approach, to make the electrical connection with the energized electrical equipment so as to bring the worker to the same potential as the energized electrical equipment. When the bucket and the energized electrical equipment are close enough such that the worker can work on the energized electrical equipment, the worker, who is already at a common potential with the energized electrical equipment, installs an electrical link such as a bonding clamp between the bucket and the energized electrical equipment so as to bring the bucket to the same potential as the energized electrical equipment. This bonding between the bucket and the energized electrical equipment is done because the buckets that are typically used for high voltage energized applications are metal lined or contain metallic elements to provide a Faraday cage or electrostatic screen.

It has been observed that bonding on to the energized electrical equipment creates an initial surge or transient in the current flowing through the energized electrical equipment. The transient may be described as a "hammer" of in-rush current. It has been further observed that the surge or transient only occurs during the bond-on process. Once the worker and the energized electrical equipment are at the common potential, the surge or transient disappears.

Based on testing, Applicant believes that the amplitude and wave shape of this initial current surge is directly related to the resistance of the insulating structure enabling the worker to reach the overhead energized electrical equipment. As one skilled in the art will understand, insulators tend to deteriorate over a period of time. Applicant believes that one of the main causes for insulator deterioration is dielectric contamination. Outdoor insulators are continuously exposed to the environment. Consequently, contaminants such as salt, dust, sand and other industrial pollutants tend to deposit or build-up on the insulator surface as a dry layer. The dry contaminant layer becomes conductive under light wetting conditions such as light rain or morning dew thereby reducing the dielectric performance of the insulator. It has been observed that when the resistance of the insulating structure or dielectric performance of the insulating structure is high, the amplitude of the transient surge is low. It has been further observed that when the resistance of the insulating structure or dielectric performance of the insulating structure is low, the amplitude of the transient surge was quite high. During laboratory testing, it was observed that the transient could have an amplitude of higher than 5A and could last for 10usec or less.

Applicant has noted that this phenomenon occurs in both AC and DC power systems. However, Applicant believes that because of the nature of DC power systems, this phenomenon may be substantially more dangerous in DC systems. In DC systems, because the voltage is constant, the bond-on will always occur at peak voltage. Further, because the voltage is constant and since it has been observed that the transient current could last for a few microseconds, it is quite possible that the transient current will not be contained to the area of the insulating structure closest to the worker but could flow through the entire length of the insulating structure.

Further, if the insulating structure is already in a compromised condition and if the transient current is of sufficiently high amplitude and duration, Applicant believes that the transient current could cause a complete failure of the insulating structure.

Applicant is not aware of any systems for countering or deflecting the transient current through the insulating structure generated during the bond-on process. This phenomenon is currently accepted in the industry as a risk.

Applicant is aware of surge arresters that protect an electronic device connected to an AC power line from an in-rush current. One such surge arrester is described in US Patent No. 8,786,995 to Koch et al. CN 105576554 discloses a control device for potential transfer currents and arcs in a UHV live-line operation and method thereof. The control device includes an inductor and a resistor in series integrated in a hand-held rod which can be clamped by an operator to a high-voltage equipment.

### SUMMARY

Embodiments described herein relate to a system which mitigates the effects of transient currents, generated during bond-on with energized electrical equipment by a human worker, on an insulating structure.

According to an aspect of the present invention, there is provided a system as claimed in claim 1

According to another aspect of the present invention, there is provided a method as claimed in claim 11.

### BRIEF DESCRIPTION OF THE DRAWINGS

Figure 1 is graph depicting an example of the amplitude and frequency of transient currents generated during a bond-on process with an energized electrical equipment by a human worker;
Figure 2 is a schematic illustration of a bond-on process, the figure illustrating one embodiment of the system described herein;
Figure 3 is a schematic illustration of another embodiment of the system described herein;
Figure 4 is a schematic illustration of yet another embodiment of the system described herein; and
Figure 5 is a schematic illustration of a further embodiment of the system described herein.

### DETAILED DESCRIPTION

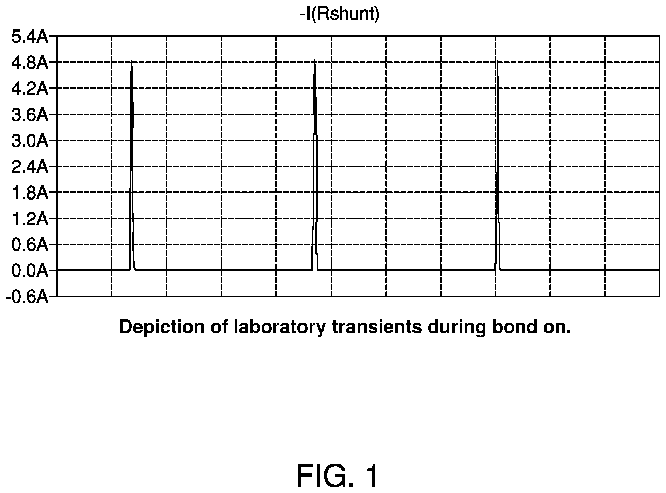

As described in the foregoing paragraphs, Applicant has observed that during live-line working on energized electrical equipment, transient currents are generated when a human worker initially bonds-on to the energized electrical equipment. Fig. 1 depicts an example of the amplitude and frequency of such transient currents.

Embodiments described herein depict and describe the energized electrical equipment as an overhead energized power line or conductor and the insulating structure as the dielectric section or sections of a boom connected to an aerial lift platform such as a bucket and bucket-lift system. However, a person skilled in the art will understand that the energized electrical equipment may include components other than power lines such as static lines, optical ground wires (OPGWs) or substation bus pipes and couplings or couplers associated with lines, wires or pipes. Couplings may include, but are not limited to, compression sleeves which join ends of two power lines together or dead-ends or dead end connectors which are used to attach power lines to supporting structures such as support towers or poles.

Also, the insulating structure may be an insulating scaffolding or a ladder on for example a ladder truck which enables a worker to be placed or positioned in the vicinity or adjacent an overhead energized electrical equipment for conducting live-line work on the electrical equipment. Such insulating ladders or scaffoldings are described and depicted respectively in Figs. 6 and 7 of Applicant's US Patent Application Publication No. 2016/0356826.

The system and method described herein may be used for controlling, countering, or deflecting transient currents in high voltage AC power systems or high voltage DC power systems.

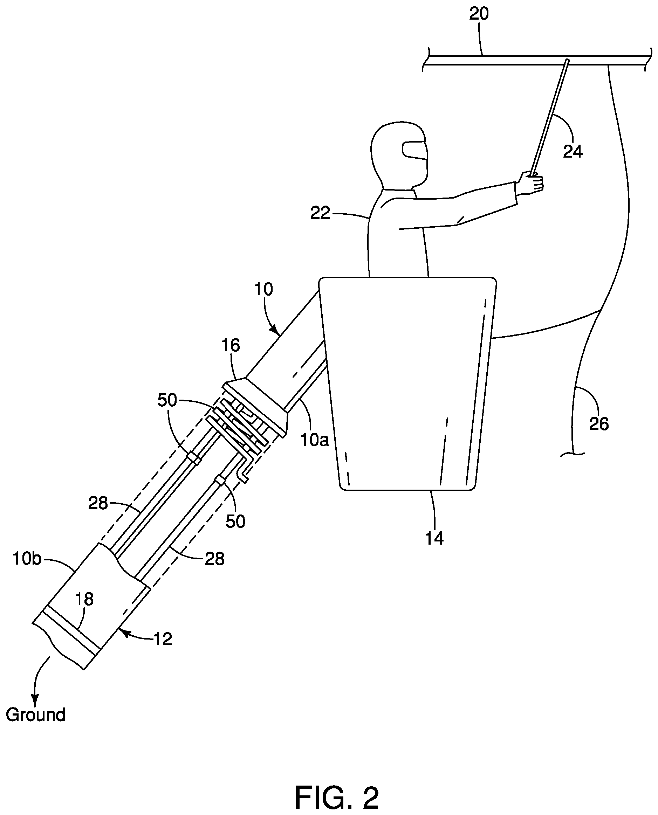

As seen in Figs. 2 to 4, in one embodiment, the insulating structure is an insulated section 10 of a boom 12. The insulated section is made of a high strength dielectric or non-electrically conductive material such as fiber reinforced plastic (FRP). The insulated section 10 is connected to an aerial lift platform such as a bucket 14 at one end 10a. The insulated section 10 is connected at its second 10b to a lift system such as on a boom truck (not shown). In one embodiment, the second end 10b is connected to the truck through one or more sections, such as boom sections made of an electrically conductive material such as steel. These electrically conductive sections of the boom have not been depicted in the accompanying drawings, as they are well known in the prior art. A corona ring 16 may be attached proximate to end 10a of the insulated boom section 10 and an exterior collector band 18 may be attached proximate to end 10b of the insulated boom section 10.

In the embodiments depicted in the accompanying drawings, the overhead energized electrical equipment needing maintenance is an energized transmission power line or conductor 20. Since the embodiments described herein are high voltage applications, the bucket 14 is preferably metal lined to provide an electrostatic screen. During operation, human worker 22 is located within the bucket and the boom 12 is extended so as to position the human worker 22 adjacent the energized transmission power line 20. In one embodiment, the energized transmission power line is a DC electrical power line having a voltage between 10,000 volts to 600,000 volts. In order to bring the worker 22 to the same potential as the energized power line 20, the worker 22 establishes an electrical connection with the energized power line 20 using a bonding wand 24. Further, after the worker 22 brings himself within a suitable working distance of the energized power line, the worker, who is now at the same potential as the energized power line 20, brings the bucket 14 to the same potential as the energized power line 20 by installing an electrical link such as a bonding clamp 26 between the bucket 14 and the energized power line 20.

As explained in the background, during bond-on with the energized power line, transient currents are generated. In order to control or counter these transients, in one embodiment and with reference to Figs. 2 to 4, at least one inductor is operatively coupled to at least the insulated section 10 of the boom. The inductor arrests or suppresses the transient currents thereby inhibiting the transient currents from propagating through the insulated section 10 of the boom. As one skilled in the art will understand, an inductor resists any change in current due its self-inductance. Since the transient currents generated during an energized bond-on are a change in current, the inductor will resist this change. The at least one inductor will resist the transient currents and will suppress the transient currents. After the transient currents die down, the inductor will have a low resistance to the steady currents flowing through the energized power line 20. The suppression of the transient currents by the inductor inhibits propagation of the transient currents through the insulated section 10 of the boom 12 thereby preventing complete breakdown of the insulated section 10 of the boom 12 and maintaining integrity of the insulated boom section 10.

The Applicant has contemplated various ways for operatively coupling the at least one inductor to the insulated boom section 10 of the boom 12.

In one embodiment and with reference to Fig. 2, the insulated boom section 10 is a hollow boom section housing one or more operating components 28 such as a leveling rod, hydraulic line or fiber optic cable. Each of the one or more operating components 28 is also operatively coupled to the bucket 14. In this embodiment, each operating component 28 is associated with an inductor 50. The inductor 50 is placed in series with the operating component 28, between the operating component 28 and the bucket 14.

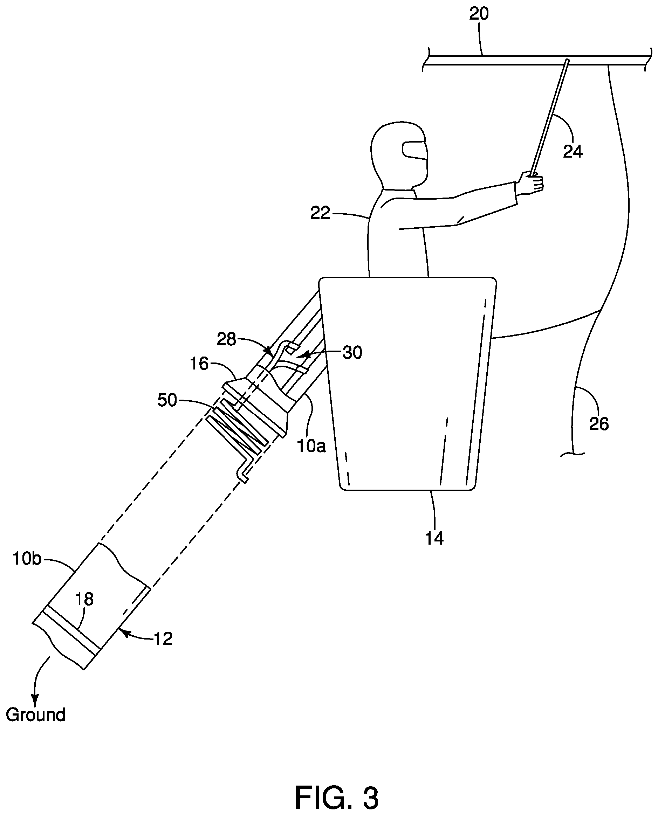

In another embodiment and with reference to Fig. 3, again the insulated boom section 10 is a hollow boom section housing a plurality of operating components 28. In this embodiment, the plurality of operating components 28 is connected together at a connection point 30 and the inductor 50 is positioned so as to be in series with the connection point 30, between the connection point 30 and the bucket 14.

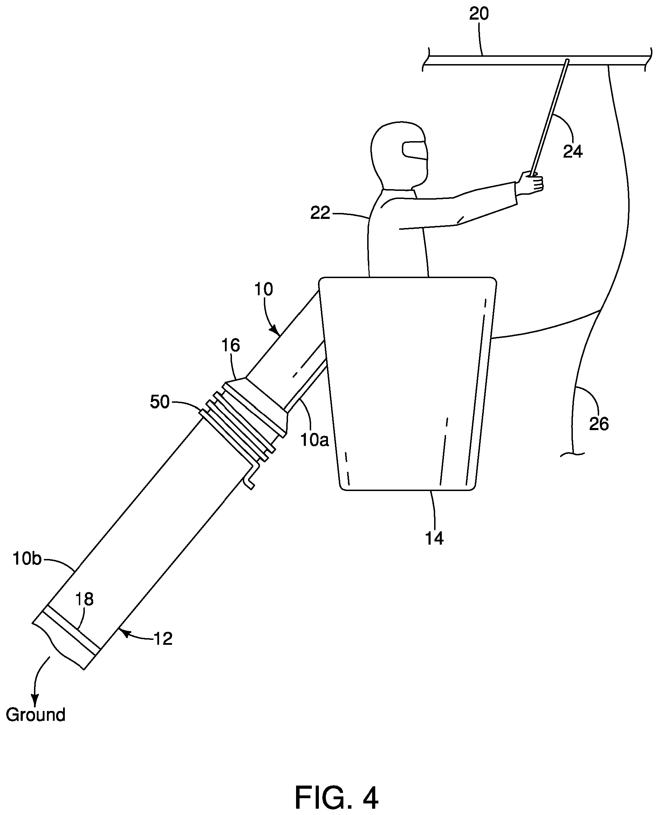

In another embodiment and with reference to Fig. 4, the insulated boom section 10 is a solid or hollow boom section with no operating components housed therein. In this embodiment, the inductor 50 is positioned so as to be placed operatively coupled to the insulated section at its end 10a.

As one skilled in the art will understand, an inductor is a coil of wire, which through the turns in the wire creates an inductance that resists changes in current. As such the inductor 50 described herein may be constructed using a cooper wire of sufficient gauge and turns. In one embodiment, the inductor 50 may be an air core inductor. In another embodiment, the inductor may be a flat conductor.

In the embodiment of Fig. 4, the inductor 50 may be mounted or laminated onto an outer surface of the insulated boom section 10 at its end 10a.

Further, as one skilled in the art will appreciate, selection of the inductor 50 will depend on the voltage of the energized electrical equipment. For example, based on testing, it has been determined that when the energized DC electrical power line has a voltage between 200,000 volts to 500,000 volts, an inductor having an inductance of 100µH or above reduces the transient currents generated during energized bond-on by at least a factor of ten or greater depending upon the inductance of the inductor.

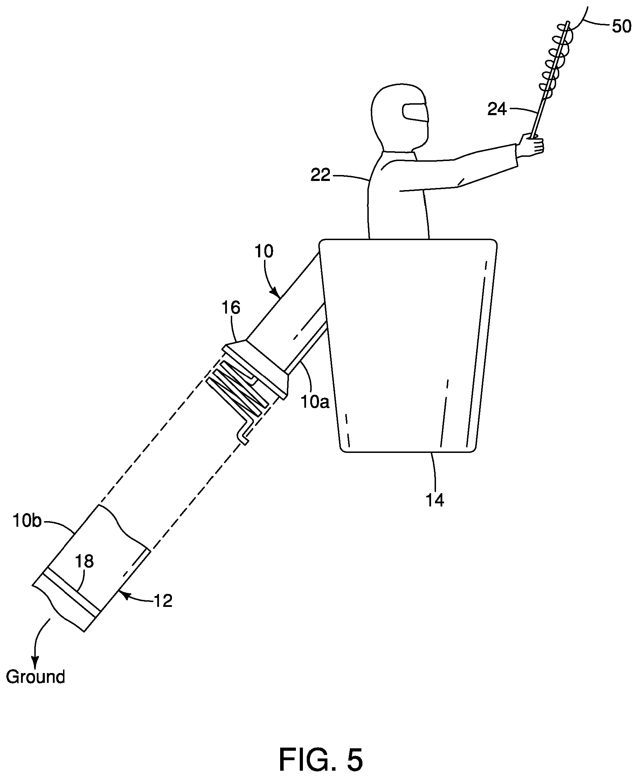

In another embodiment and with reference to Fig. 5, Applicant has contemplated incorporating the inductor 50 in the bonding wand 24 so as to suppress the transients. Typically, a bonding wand includes a conductive hook and an insulated gripping portion. The conductive hook is connected to the basket 14 by a cable (not shown). In the contemplated embodiment, the inductor 50 is placed in series with the conductive hook, between the conductive hook and the gripping portion.

In use, the boom 12 including its insulated section 10 is manipulated so as to position the insulated section 10, bucket 14 and worker 22 adjacent the energized power line 20. The insulated section 10 is or has been operatively coupled to an inductor 50 using one or a combination of the arrangements described above. The worker 22 is brought to the voltage potential of the energized power line 20 by the worker 22 contacting the energized power line 20 with for example a bonding wand 24 and attaching the bonding clamp 26 between the energized power line 20 and the bucket 14. During the bonding-on process, the inductor 50 suppresses the transient currents generated and thereby inhibits propagation of the transient currents through the insulating section 10 of the boom 12.

## Claims

1. A system for use with overhead energized electrical equipment for controlling transient currents generated during bond-on with the energized electrical equipment (20) by a human worker (22), the system comprising:
an electrically insulating structure adapted to carry the worker at a first end of the electrically insulating structure and to position the worker (22) adjacent the energized electrical equipment (20), the electrically insulating structure including at least one insulated section (10) of a boom connected to an aerial lift platform (14) at the first end and connected to a lift system via a second end, the at least one insulated section (10) comprising at least one inductor operatively coupled to the first end of the insulated section (10);
and wherein, in use, when the worker (22) is on the aerial lift platform and is positioned adjacent the energized electrical equipment (20) and is bonding-on to the energized electrical equipment for achieving a common potential with the energized electrical equipment, the at least one inductor is configured to resist the transient currents from the energized electrical equipment (20) to thereby inhibit propagation of the transient currents through the electrically insulating structure.

2. The system of claim 1, wherein the at least one inductor is operatively coupled to the at least one insulated section (10) at the first end.

3. The system of claim 1, wherein the at least one insulated section houses at least one operating component (28) which is operatively coupled to the aerial lift platform (14), and wherein the at least one inductor is placed in series with the at least one operating component (28).

4. The system of claim 1, wherein the at least one insulated section houses a plurality of operating components (28) which are connected to the aerial lift platform (14) through a connection point and wherein the at least one inductor is placed in series with the connection point.

5. The system of claim 2, wherein the operating component (28) is a hydraulic line, a levelling rod or a fiber optic cable.

6. The system of claim 1, wherein the energized electrical equipment (20) is an energized DC electrical power line having a voltage between 10,000 volts to 600,000 volts, inclusive.

7. The system of claim 1, wherein the at least one inductor is an air core inductor.

8. The system of claim 2, wherein the at least one inductor is a flat conductor.

9. The system of claim 8, wherein the at least one inductor is laminated onto an outer surface of the at least one insulated section at the first end.

10. The system of claim 6, wherein when the energized DC electrical power line has a voltage between 200,000 volts to 500,000 volts, an inductance of the at least one inductor is at least 100µH.

11. A method for controlling transient currents generated during bond-on with overhead energized electrical equipment (20) by a human worker (22) using the system of claim 1, the method comprising:
using the electrically insulating structure, carrying and positioning the worker (22) adjacent the energized electrical equipment (20);
bonding-on the worker (22) to the energized electrical equipment (20), whereby the at least one inductor resists the transient currents from the energized electrical equipment so as to inhibit propagation of the transient currents through the electrically insulating structure.

12. The method of claim 11, wherein the at least one insulated section houses at least one operating component (28) which is operatively coupled to the aerial lift platform (14), and wherein the method further comprises placing the at least one inductor in series with the at least one operating component (28).

13. The method of claim 11, wherein the at least one insulated section houses a plurality of operating components (28) which are connected to the aerial lift platform (14) through a connection point, and wherein the method further comprises placing the at least one inductor in series with the connection point.

14. The method of claim 11, wherein the aerial lift platform (14) includes metal components, and wherein the step of bonding-on comprises the worker (22) contacting the energized electrical equipment (20) with a bonding wand (24) and attaching an electrical link between the energized electrical equipment (20) and the aerial lift platform (14).

## Patentansprüche

1. System zur Verwendung mit unter Spannung stehenden, überkopf montierten, elektrischen Anlagen zum Steuern von transienten Strömen, die bei Anbindung an die unter Spannung stehende elektrische Anlage (20) durch einen Arbeiter (22) erzeugt werden, wobei das System aufweist:
eine elektrisch isolierende Struktur, die dazu ausgelegt ist, den Arbeiter an einem ersten Ende der elektrisch isolierenden Struktur zu tragen und den Arbeiter (22) benachbart zu der unter Spannung stehenden elektrischen Anlage (20) zu positionieren, wobei die elektrisch isolierende Struktur mindestens einen isolierten Abschnitt (10) eines Auslegers umfasst, der am ersten Ende mit einer Hubarbeitsbühne (14) verbunden ist und über ein zweites Ende mit einem Hubsystem verbunden ist, wobei der mindestens eine isolierte Abschnitt (10) mindestens eine Induktivität umfasst, die mit dem ersten Ende des isolierten Abschnitts (10) operativ gekoppelt ist;
und wobei bei Gebrauch, wenn der Arbeiter (22) auf der Hubarbeitsbühne ist und benachbart zu der unter Spannung stehenden elektrischen Anlage (20) positioniert ist und mit der unter Spannung stehenden elektrischen Anlage in Anbindung steht, um ein gemeinsames Potential mit der unter Spannung stehenden elektrischen Anlage zu erreichen, die mindestens eine Induktivität konfiguriert ist, um den transienten Strömen von der unter Spannung stehenden elektrischen Anlage (20) zu widerstehen, um dadurch eine Ausbreitung der transienten Ströme durch die elektrisch isolierende Struktur zu verhindern.

2. System nach Anspruch 1, wobei die mindestens eine Induktivität am ersten Ende operativ mit dem mindestens einen isolierten Abschnitt (10) gekoppelt ist.

3. System nach Anspruch 1, wobei der mindestens eine isolierte Abschnitt mindestens eine Betriebskomponente (28) aufnimmt, die operativ mit der Hubarbeitsbühne (14) gekoppelt ist, und wobei die mindestens eine Induktivität in Reihe mit der mindestens einen Betriebskomponente (28) angeordnet ist.

4. System nach Anspruch 1, wobei der mindestens eine isolierte Abschnitt eine Vielzahl von Betriebskomponenten (28) aufnimmt, die mit der Hubarbeitsbühne (14) durch einen Verbindungspunkt verbunden sind, und wobei die mindestens eine Induktivität in Reihe mit dem Verbindungspunkt angeordnet ist.

5. System nach Anspruch 2, wobei die Betriebskomponente (28) eine Hydraulikleitung, eine Nivellierstange oder ein Glasfaserkabel ist.

6. System nach Anspruch 1, wobei die unter Spannung stehende elektrische Anlage (20) eine unter Spannung stehende, elektrische Gleichstromleitung mit einer Spannung zwischen 10.000 Volt und 600.000 Volt einschließlich ist.

7. System nach Anspruch 1, wobei die mindestens eine Induktivität eine Luftkerninduktivität ist.

8. System nach Anspruch 2, wobei die mindestens eine Induktivität ein Flachleiter ist.

9. System nach Anspruch 8, wobei die mindestens eine Induktivität auf eine äußere Fläche des mindestens einen isolierten Abschnitts am ersten Ende laminiert ist.

10. System nach Anspruch 6, wobei, wenn die unter Spannung stehende elektrische Gleichstromleitung eine Spannung zwischen 200.000 Volt und 500.000 Volt aufweist, die Induktivität der mindestens einen Induktivität mindestens 100 µH beträgt.

11. Verfahren zum Steuern von transienten Strömen, die bei Anbindung an unter Spannung stehende, überkopf montierte, elektrische Anlagen (20) durch einen Arbeiter (22) unter Verwendung des Systems nach Anspruch 1 erzeugt werden, wobei das Verfahren umfasst:
Verwenden der elektrisch isolierenden Struktur, um den Arbeiter (22) zu tragen und benachbart zu der unter Spannung stehenden elektrischen Anlage (20) zu positionieren;
Anbinden des Arbeiters (22) an die unter Spannung stehende elektrische Anlage (20), wobei die mindestens eine Induktivität den transienten Strömen von der unter Spannung stehenden elektrischen Anlage widersteht, um die Ausbreitung der transienten Ströme durch die elektrisch isolierende Struktur zu verhindern.

12. Verfahren nach Anspruch 11, wobei der mindestens eine isolierte Abschnitt mindestens eine Betriebskomponente (28) aufnimmt, die operativ mit der Hubarbeitsbühne (14) gekoppelt ist, und wobei das Verfahren ferner ein Anordnen der mindestens einen Induktivität in Reihe mit der mindestens einen Betriebskomponente (28) umfasst.

13. Verfahren nach Anspruch 11, wobei der mindestens eine isolierte Abschnitt eine Vielzahl von Betriebskomponenten (28) aufnimmt, die mit der Hubarbeitsbühne (14) durch einen Anschlusspunkt verbunden sind, und wobei das Verfahren ferner ein Anordnen der mindestens einen Induktivität in Reihe mit dem Anschlusspunkt umfasst.

14. Verfahren nach Anspruch 11, wobei die Hubarbeitsbühne (14) Metallkomponenten umfasst und wobei der Schritt des Anbindens umfasst, dass der Arbeiter (22) die unter Spannung stehende elektrische Anlage (20) mit einem Bonding-Stab (24) berührt und eine elektrische Verbindung zwischen der unter Spannung stehenden elektrischen Anlage (20) und der Hubarbeitsbühne (14) herbeiführt.

## Revendications

1. - Système destiné à être utilisé avec un équipement électrique aérien sous tension pour contrôler des courants transitoires générés lors d'un raccordement avec l'équipement électrique sous tension (20) par un travailleur humain (22), le système comprenant :
une structure électriquement isolante conçue pour porter le travailleur à une première extrémité de la structure électriquement isolante et pour positionner le travailleur (22) à proximité de l'équipement électrique sous tension (20), la structure électriquement isolante comprenant au moins une section isolée (10) d'une flèche reliée à une plate-forme élévatrice aérienne (14) à la première extrémité et reliée à un système de levage par l'intermédiaire d'une seconde extrémité, l'au moins une section isolée (10) comprenant au moins une bobine d'inductance couplée de manière fonctionnelle à la première extrémité de la section isolée (10) ; et
dans lequel, en utilisation, lorsque le travailleur (22) se trouve sur la plate-forme élévatrice aérienne et est positionné à proximité de l'équipement électrique sous tension (20) et est raccordé à l'équipement électrique sous tension pour atteindre un potentiel commun avec l'équipement électrique sous tension, l'au moins une bobine d'inductance est configurée pour s'opposer aux courants transitoires provenant de l'équipement électrique sous tension (20) afin d'empêcher ainsi la propagation des courants transitoires à travers la structure électriquement isolante.

2. - Système selon la revendication 1, dans lequel l'au moins une bobine d'inductance est couplée de manière fonctionnelle à l'au moins une section isolée (10) à la première extrémité.

3. - Système selon la revendication 1, dans lequel l'au moins une section isolée reçoit au moins un composant fonctionnel (28) qui est couplé de manière fonctionnelle à la plate-forme élévatrice aérienne (14), et dans lequel l'au moins une bobine d'inductance est placée en série avec l'au moins un composant fonctionnel (28).

4. - Système selon la revendication 1, dans lequel l'au moins une section isolée reçoit une pluralité de composants fonctionnels (28) qui sont connectés à la plate-forme élévatrice aérienne (14) par l'intermédiaire d'un point de raccordement, et dans lequel l'au moins une bobine d'inductance est placée en série avec le point de raccordement.

5. - Système selon la revendication 2, dans lequel le composant fonctionnel (28) est une conduite hydraulique, une tige de nivellement ou un câble à fibre optique.

6. - Système selon la revendication 1, dans lequel l'équipement électrique sous tension (20) est une ligne de puissance électrique à courant continu sous tension ayant une tension comprise entre 10 000 volts et 600 000 volts, inclus.

7. - Système selon la revendication 1, dans lequel l'au moins une bobine d'inductance est une bobine d'inductance à noyau d'air.

8. - Système selon la revendication 2, dans lequel l'au moins une bobine d'inductance est un conducteur plat.

9. - Système selon la revendication 8, dans lequel l'au moins une bobine d'inductance est laminée sur une surface extérieure de l'au moins une section isolée à la première extrémité.

10. - Système selon la revendication 6, dans lequel, lorsque la ligne de puissance électrique à courant continu sous tension a une tension comprise entre 200 000 volts et 500 000 volts, une inductance de l'au moins une bobine d'inductance est d'au moins 100 µH.

11. - Procédé pour contrôler des courants transitoires générés lors d'un raccordement avec un équipement électrique aérien sous tension (20) par un travailleur humain (22) à l'aide du système selon la revendication 1, le procédé comprenant :
utiliser la structure électriquement isolante pour porter et positionner le travailleur (22) à proximité de l'équipement électrique sous tension (20) ;
raccorder le travailleur (22) à l'équipement électrique sous tension (20), moyennant quoi l'au moins une bobine d'inductance s'oppose aux courants transitoires provenant de l'équipement électrique sous tension de manière à empêcher la propagation des courants transitoires à travers la structure électriquement isolante.

12. - Procédé selon la revendication 11, dans lequel l'au moins une section isolée reçoit au moins un composant fonctionnel (28) qui est couplé de manière fonctionnelle à la plate-forme élévatrice aérienne (14), et dans lequel le procédé comprend en outre le placement de l'au moins une bobine d'inductance en série avec l'au moins un composant fonctionnel (28).

13. - Procédé selon la revendication 11, dans lequel l'au moins une section isolée reçoit une pluralité de composants fonctionnels (28) qui sont connectés à la plate-forme élévatrice aérienne (14) par l'intermédiaire d'un point de raccordement, et dans lequel le procédé comprend en outre le placement de l'au moins une bobine d'inductance en série avec le point de raccordement.

14. - Procédé selon la revendication 11, dans lequel la plate-forme élévatrice aérienne (14) comprend des composants métalliques, et dans lequel l'étape de raccordement comprend la mise en contact du travailleur (22) avec l'équipement électrique sous tension (20) à l'aide d'une baguette de raccordement (24) et la fixation d' un raccord électrique entre l'équipement électrique sous tension (20) et la plate-forme élévatrice aérienne (14).
